# EUROPEAN PATENT APPLICATION

(11) **EP 3 564 556 A1**
(43) Date of publication of application: **06.11.2019**
(21) Application number: 16925423.2
(22) Date of filing: 29.12.2016
(51) Int. Cl.: F16H 3/72, F16H 3/46

(54) **MULTI-STAGE TRANSMISSION**

(71) Applicant: Ha, Tae Hwan, Seoul 01776 (KR)
(72) Inventor: Ha, Tae Hwan, Seoul 01776 (KR)
(74) Representative: Murgitroyd & Company
(86) International application number: PCT/KR2016/015523
(87) International publication number: WO 2018/124340

(57) **Abstract**

A multi-stage transmission comprises: a ring gear having inner gear teeth formed on the inner side; a first transmission module comprising first shaft, which is disposed on the inner side of the ring gear and has a first sun gear formed on the outer peripheral side, a first pinion gear, which is a gear coupled to the first sun gear and the inner gear teeth, and a first transmission unit which enables rotation and revolution of the first pinion gear inside the ring gear; and a second transmission module comprising a second shaft, which is disposed on the inner side of the ring gear and has a second sun gear formed on the outer peripheral side, a second pinion gear, which is a gear coupled to the second sun gear and the inner gear teeth, and a second transmission unit which enables rotation and revolution of the second pinion gear inside the ring gear.

## Description

### [Technical Field]

The teachings in accordance with exemplary and non-limiting embodiments of this invention relate generally to a multi-stage transmission, and more particularly to a multi-stage transmission variably applicable to overall industries, including but not limited to, super-sized ships, large military vehicles, trains, robot joints, conveyor belts, electric vehicles and wind generators.

### [Background Art]

In general, a transmission is defined as a device outputting a power generated from a power source by transferring the power to a necessary rotating power in response to a required speed. For example, a transmission used for a vehicle reduces a revolution when starting a vehicle at a stationary state but generates a large torque by increasing the torque in order to start a vehicle. Furthermore, a transmission increases a revolution instead of reducing the torque in order to run a vehicle at a high speed.

A transmission has been developed as a manual transmission featured with a driver-operated clutch and a movable gear-stick and an automatic, hydraulic planetary transmission that automatically transfers in response to speed using hydraulic pressure.

Meantime, the Korean registered patent No.: KR10-1158341 discloses a technique (entitled as "power transmitting apparatus using planetary gear", registered on June 4, 2012) to help a user to shift up and shift down a gear in various types by using a planetary gear set and power change source.

However, the power transmitting apparatus using a planetary gear set suffers from disadvantages in that it is difficult to rotate a rotating body for super-sized ships, large military vehicles, trains, robot joints, conveyor belts, electric vehicles and wind generators at about 3,000rpm, and there is a transmission limit in using the planetary gear set.

### [Detailed Description of the Invention]

### [Technical Subject]

Therefore, the exemplary embodiments of the present invention are to provide a multi-stage transmission configured to allow a vehicle to start at a high revolution without reducing the high revolution outputted from a power source such as super-sized ships, large military vehicles, trains, robot joints, conveyor belts, electric vehicles and wind generators and to allow a vehicle to additionally reach a secondary highest speed after reaching a primary highest speed after start.

### [Technical Solution]

In one generat aspect of the present invention, there is provided a multi-stage transmission, comprising:
a ring gear having inner gear teeth formed on the inner side;
a first transmission module comprising first shaft, which is disposed on the inner side of the ring gear and has a first sun gear formed on the outer peripheral side, a first pinion gear, which is a gear coupled to the first sun gear and the inner gear teeth, and a first transmission unit which enables rotation and revolution of the first pinion gear inside the ring gear; and
a second transmission module comprising a second shaft, which is disposed on the inner side of the ring gear and has a second sun gear formed on the outer peripheral side, a second pinion gear, which is a gear coupled to the second sun gear and the inner gear teeth, and a second transmission unit which enables rotation and revolution of the second pinion gear inside the ring gear.

Preferably but not necessarily, the first shaft and the second shaft in the ring gear may be mutually spaced apart, wherein the first shaft and the second shaft may be disposed at a rotating center of the ring gear.

Preferably but not necessarily, the multi-stage transmission may further comprise:
a support plate supporting a distal end of the first shaft and a distal end of the second shaft, each oppositely disposed; and
a bearing coupled to the support plate to rotatably support the distal end of the first shaft and the distal end of the second shaft.

Preferably but not necessarily, the support plate may be fixed to an inner side of the ring geart to rotate along with the ring gear.

Preferably but not necessarily, a plurality of the first pinion gears and the second pinion gears may be coupled to the inner gear teeth of the ring gear each at an equal angle.

Preferably but not necessarily, the first transmission unit may include a first carrier rotatably fixing the first pinion gears, a first driving gear revolving the first pinion gears relative to the first shaft by rotating the first carrier, and a first rotating unit rotating the first driving gear to a forward direction or to a backward direction.

Preferably but not necessarily, the first carrier may include a first carrier body part encompassing the first shaft, and a second carrier body part extended from the first carrier body part wherein the second carrier body part may be formed with a first opening exposing the first pinion gears, and wherein an outside of the ring gear on the first carrier body part may be gear coupled by a first driving gear.

Preferably but not necessarily, the second transmission unit may include a second carrier rotatably fixing the second pinion gears, a second driving gear revolving the second pinion gears relative to the second shaft by rotating the second pinion gears, and a rotating unit rotating the second driving gear to a forward direction or to a backward direction.

Preferably but not necessarily, the second carrier may include a third carrier body part encompassing the second shaft and a fourth carrier body part extended from the third carrier body part, wherein the third carrier body part may be formed with a second opening exposing the second pinion gears, and gear-coupled by the second driving gear at an outside of the ring gear in the third carrier body part.

Preferably, but not necessarily, the first transmission unit and the second transmission unit may rotate and revolve the first pinion gear and the second pinion gear at mutually different speeds.

Preferably, but not necessarily, the inner teeth of the ring gear may be locally formed on an area corresponding to that of the first and second pinion gears.

Preferably, but not necessarily, the ring gear may be formed in a cylindrical shape to accommodate the first and second pinion gears.

Preferably, but not necessarily, the multi-stage transmission may further comprise a cover encompassing the ring gear, and the first and second transmission modules and exposing the first and second shafts.

Preferably, but not necessarily, the first shaft may be an input shaft applied with a power and the second shaft may be an output shaft outputting the power.

Preferably, but not necessarily, the ring gear may be formed at an outer lateral surface with outside teeth gear-coupled to a gear formed on the power source applying a rotational force from an outside.

Preferably, but not necessarily, the multi-stage transmission may further comprise a control module applying a control signal to the first and second transmission modules in order to control the revolution of the first pinion gear, the rotating direction, the revolution of the second pinion gear and the rotating direction.

Preferably, but not necessarily, the control module may provide a control signal to the first transmission module to revolve the first pinion gear with the same revolution as that of the first shaft.

### [Advantageous Effects]

The multi-stage transmission according to the present invention has an advantageous effect in that a high revolution outputted from a power source such as super-sized ships, large military vehicles, trains, robot joints, conveyor belts, electric vehicles and wind generators is not reduced in speed, primarily converted (transmitted) and secondarily converted to a high gear.

### [Brief Description of Drawings]

FIG. 1 is an external perspective view of a multi-stage transmission according to an exemplary embodiment of the present invention.
FIG. 2 is an exploded perspective view of FIG. 1.
FIG. 3 is a cross-sectional view taken along line I-I' of FIG. 2.
FIG. 4 is a cross-sectional view taken along line II-II' of FIG. 3.
FIG. 5 is a graph illustrating a relationship between engine rpm and speed used in the conventional automobile engine.
FIG. 6 is a graph illustrating an rpm of multi-stage transmission, a first transmission module and speed of a vehicle according to an exemplary embodiment of the present invention.
FIG. 7 is a graph illustrating an accelerated speed and a decelerated speed of a vehicle under a first speed (FA) using a second transmission module.

### [BEST MODE]

It should be appreciated that hereinafter-explained present invention may be implemented in numerous ways, one or more particular exemplary embodiments of which are shown in the figures, and described in detail in the detailed description.

The terminology used herein is for the purpose of describing particular example embodiments only and is not intended to be limiting. It is to be understood that the terminology used herein is for the purpose of describing particular examplary embodiments only and is not intended to be limiting, and various modifications, additions and substitutions are possible, without departing from the scope and spirit of the invention.

Accordingly, in some embodiments, well-known processes, well-known device structures and well-known techniques are not illustrated in detail to avoid unclear interpretation of the present disclosure.

In the specification, a singular form of terms includes plural forms thereof, unless specifically mentioned otherwise. In the term "comprises", "includes", "comprising" and/or "including" as used herein, the mentioned component, step, operation and/or device is not excluded from presence or addition of one or more other components, steps, operations and/or devices.

Furthermore, although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section.

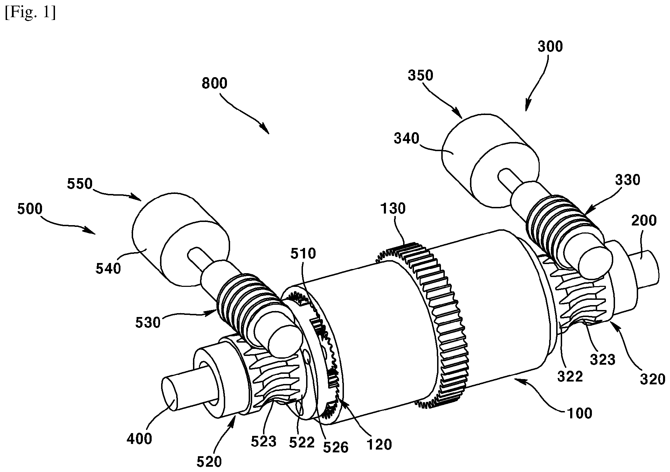

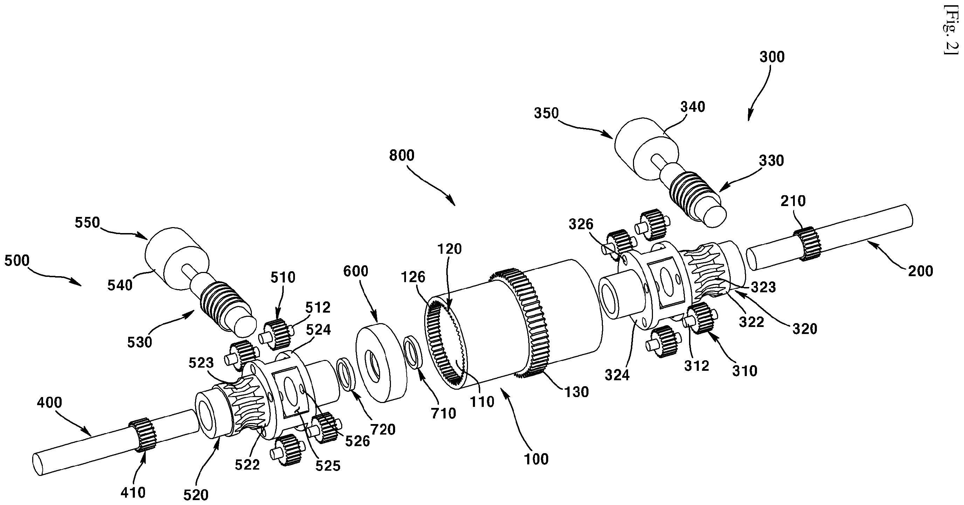

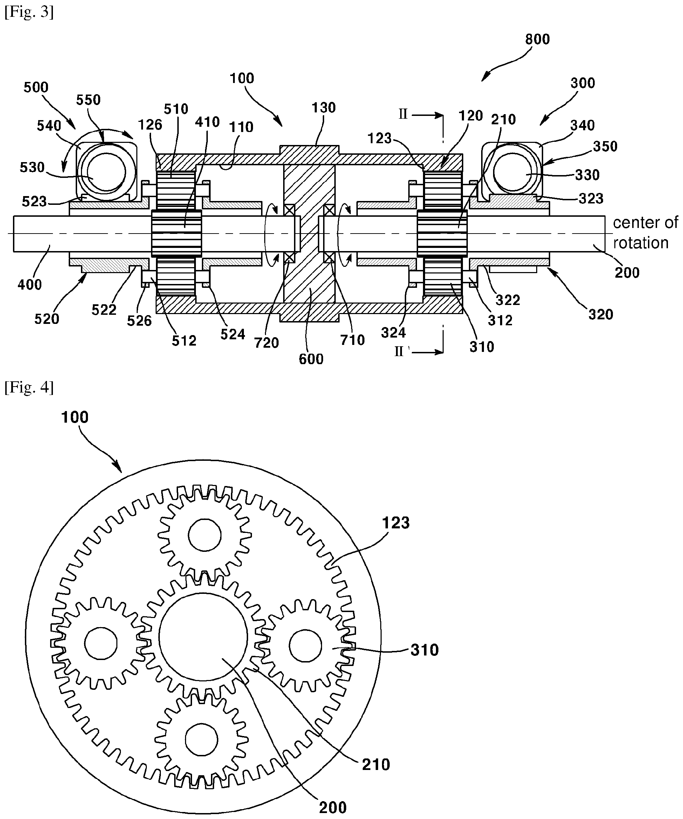

FIG. 1 is an external perspective view of a multi-stage transmission according to an exemplary embodiment of the present invention, FIG. 2 is an exploded perspective view of FIG. 1, and FIG. 3 is a cross-sectional view taken along line I-I' of FIG. 2.

Referring to FIGS. 1, 2 and 3, a multi-stage transmission (800) may comprise a ring gear (100), a first shaft (200), a first transmission module (300), a second shaft (400) and a second transmission module (500). In addition, the multi-stage transmission (800) may further comprise a support plate (600), and first and second bearings (710,720).

In the exemplary embodiment of the present invention, the ring gear (100) may be formed with a cylindrical shape, for example. A length of the ring gear (100) formed with a cylindrical shape may be formed with a length accommodating the first pinion gear of a first transmission unit (described later) and the second pinion gear of a second transmission unit (described later).

In the exemplary embodiment of the present invention, the ring gear (100) may be internally formed with a cylindrical shape, and an inner lateral surface (110) of the ring gear (100) may be formed with inner gear teeth (120).

The inner gear teeth (120) formed on the inner lateral surface (110) of ring gear (100) may be formed in the number of one. Alternatively, the inner gear teeth (120) formed on the inner lateral surface (110) of ring gear (100) may be formed in the number of two.

In the exemplary embodiment of the present invention, an outer lateral (external) surface facing the inner lateral surface (110) of the ring gear (100) may be disposed with external gear teeth (130), where the external gear teeth (130) may be gear-coupled with a shaft of an outside power source.

The external gear teeth (130) disposed on an outside of the ring gear (100) may be coupled to a rotating shaft of outside power source, may rotate a first shaft (200) and a second shaft (400) with a different revolution through the first and second transmission modules (300, 500) by rotating the ring gear (100).

The inner gear teeth (120) in the exemplary embodiment of the present invention may be formed in the number of two, and may include a first inner gear teeth (123) and a second inner gear teeth (126).

The first inner gear teeth (123) may be formed at a position adjacent to one lateral end of the gear (100), and the second inner gear teeth (126) may be formed at a position adjacent to the other lateral end facing the one lateral end of the ring gear (100).

The number of gear teeth formed on the first inner tooth (123) and the number of gear teeth formed on the second inner gear teeth (126) in the exemplary embodiment of the present invention may be mutually identical or mutually different.

The ring gear (100) may be formed with a thermally-treated alloy steel or a thermally-treated carbon steel that is not to be generated with a damage or a shape change by stress applied from outside.

The first shaft (200) may be disposed at an inside of the ring gear (100), and a portion of the first shaft (200) may be disposed at an inside of the ring gear (100) and a portion of the first gear (200) may be disposed outside of the ring gear (100).

The first shaft (200) may be disposed at a rotating center of ring gear (100), and an area disposed at an inside of the ring gear (100) on the first shaft (200) may be formed with a first sun gear part (210). The first sun gear part (210) may be formed along an outer peripheral surface of first shaft (200).

The first shaft (200) according to an exemplary embodiment of the present invention may be directly connected to various power sources outputting a rotational force.

For example, the first shaft (200) may be directly applied with a rotational force outputted from an engine of a super-sized ship, a rotational force outputted from an engine of a large military vehicle, a rotational force outputted from a driving source of a train, a rotational force outputted from a motor used for robot joint, a rotational force outputted from a motor driving a converyor belt, a rotational force outputted from an electric motor of an electric vehicle, a rotational force outputted from a motor of a windpower generator, and a rotational force having having more than about 3,000rpm outputted from an engine and a motor of a conventional vehicle, without being reduced in speed.

Although the exemplary embodiment of the present invention has explained that a rotational force having a revolution more than about 3,000rpm is directly applied without being reduced in speed from various power sources, it may be possible that the first shaft (200) may be directly applied with a rotational force having a revolution less than 3,000rpm without being reduced in speed.

A distal end disposed at an inside of the ring gear (100) on the first shaft (200) may be coupled by a first bearing (710), and the first bearing (710) may be coupled to a support plate (600) disposed at an inside of the ring gear (100).

The first shaft (200) may be more stably fixed into the ring gear (100) by coupling the distal end disposed at an inside of the ring gear (100) on the first shaft (200) to the support plate (600) using the first bearing (710).

FIG. 4 is a cross-sectional view taken along line II-II' of FIG. 3.

Referring to FIGS. 1 to 4, a first transmission module (300) may include a first pinion gear (310) and a second transmission unit (350).

The first pinion gear (310) may be disposed at an inside of the ring gear (100) and the first pinion gear (310) may be disposed inside of the ring gear (100) with a plurality of numbers.

Three or more first pinion gears (310) may be disposed inside of the ring gear (100) (310) according to the exemplary embodiment of the present invention and a center of the first pinion gear (310) may be formed with a through hole and the through hole passing through the first pinion gear (310) may be coupled by a first pinion gear shaft (312).

The said four first pinion gears (310) according to the exemplary embodiment of the present invention may be disposed inside of the ring gear (100).

Gear teeth formed on the outer peripheral surface of each first pinion gear (310) may be gear-coupled with a first inner gear teeth (123) disposed at an inside of the ring gear (100) and a first sun gear part (210) formed on the first shaft (200).

The first pinion gears (310) may rotate while being fixed inside the ring gear (100) by the first transmission unit (350) or revolve relative to the first shaft (200) inside the ring gear (100) based on the first shaft (200).

The first transmission unit (350) may include a first carrier (320), a first driving gear (330) and a first rotation unit (340).

The first carrier (320) may fix the first pinion gears (100) to allow rotating or revolving inside the ring gears (310).

The first carrier (320) may include a first carrier body part (322) and a second carrier body part (324).

The first carrier body part (322) may take a cylindrical shap and the first carrier body part (322) may be inserted into by the first shaft (200).

A portion of the first carrier body part (322) may be disposed inside the ring gear (100) and a portion of the first carrier body part (322) may be disposed outside of the ring gear (100).

The first carrier body part (322) disposed outside of the ring gear (100) may be formed with gear teeth (323).

The second carrier body part (324) may be formed by expanding a portion of the first carrier body part (322), and the second carrier body part (324) may be formed on a position corresponding to that of the first sun gear part (210) formed on the first shaft (200). The second carrier body part (324) extended from the first carrier body part (322) may be disposed with first openings (325), wherein the first openings (325) may be formed at a position corresponding to that of the first pinion gears (310).

Each of the second carrier body parts (324) may be formed with a first shaft hole (326) coupled to a first pinion gear shaft (312) coupled to a rotating center of the first pinion gear (310).

A portion of gear teeth of the first pinion gear (310) may be exposed from the first openings (325) of the second carrier body part (324) while the first pinion gear (310) is coupled to the first shaft hole (326), and the gear teeth of the first pinion gear (310) may be respectively gear-coupled to the first sun gear part (210) formed on the first shaft (200) and to the first inner gear teeth (123) of the ring gear (100).

The first driving gear (330) may stop or rotate the first carrier (320), and the first driving gear (330) may rotate the first carrier (320) to a same direction as that of the rotating direction of the first shaft (200) or to a direction opposite from that of the rotating direction of the first shaft (200).

The first driving gear (330) may be vertically coupled to the second carrier body part (324), for example, and the first driving gear (330) may be used by a worm gear or various gears that change the rotating direction, for example.

The first rotating unit (340) may be coupled to the first driving gear (330), and the first rotating unit (340) may rotate the first driving gear (330). The first rotating unit (340) may include a motor, for example.

The first rotating unit (340) in the exemplary embodiment of the present invention may be used by a motor configured to adjust the rotating speed of the first driving gear (330) in response to a current without using a decelerator.

Hereinafter, the second shaft and second transmission unit will be described with reference to FIGS. 1 to 4.

The second shaft (400) may be disposed at an inside of the ring gear (100), a portion of the second shaft (400) may be disposed at an inside of the ring gear (100) and a portion of the second shaft (400) may be disposed outside of the ring gear (100)

The second shaft (400) may be disposed on a rotating center of the ring gear (100) in the same manner as that of the first shaft (200), and the second sun gear part (410) may be disposed at an area disposed inside of the ring gear (100) on the second shaft (400). The first sun gear part (410) may be formed along an outer peripheral surface of the second shaft (400).

A distal end disposed at an inside of the ring gear (100) on the second shaft (400) may be coupled by a second bearing (720), and the second bearing (720) may be coupled to the support plate (600) disposed at an inside of the ring gear (100).

The second shaft (400) can be more stably fixed to an inside of the ring gear (100) by coupling a distal end disposed at an inside of the ring gear (100) to the support plate (600) using the second bearing (720).

The second transmission module (500) may include a second pinion gear (510) and a second transmission unit (550).

The second pinion gear (510) may be disposed at an inside of the ring gear (100) along with the first pinion gear (310), and the second pinion gear (510) may be disposed inside the ring gear (100) in a plural number.

The second pinion gear (510) in the exemplary embodiment of the present invention may be at an inside of the ring gear (100) in the number of three (3) or four (4), and a center of the second pinion gear (510) may be formed with a through hole, and the through hole passing through the second pinion gear (510) may be coupled by a second pinion gear shaft (512).

In the exemplary embodiment of the present invention, three second pinion 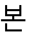 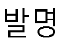 gears (510) may be disposed at an inside of the ring gear (100).

The gear teeth formed on the outer peripheral surface of each second pinion gear (510) may be gear-coupled to the second inner gear teeth (126) disposed at an inside of ring gear (100) and to the first sun gear part (410) formed on the second shaft (400).

The second pinion gears (510) may rotate while being disposed at an inside of the ring gear (100) by the second transmission unit (550) or may revolve relative to the second shaft (400) inside of the ring gear (100) based on the second shaft (400).

The second transmission unit (550) may include a second carrier (520), a second driving gear (530) and a second rotating unit (540).

The second carrier (520) may rotatably or revolvingly fix the second pinion gears (510) within the ring gear (100).

The second carrier (520) may include a third carrier body part (522) and a fourth carrier body part (524).

The third carrier body part (522) may take a cylindrical shape, and the third carrier body part (522) may be internally inserted by the second shaft (400).

A portion of the third carrier body part (522) may be disposed at an inside of the ring gear (100), and a portion of the third carrier body part (522) may be disposed outside of the ring gear (100).

The third carrier body part (522) disposed outside of the ring gear (100) may be formed with gear teeth (523).

The fourth carrier body part (524) may be formed by expanding a portio of the third carrier body part (522), and the fourth carrier body part (524) may be formed on a position corresponding to that of the second sun gear part (410) formed on the second shaft (400).

The fourth carrier body part (524) expanded from the third carrier body part (522) may be formed with second openings (525), and the second openings (525) may be formed at a position corresponding to that of the second pinion gears (510).

Each of the fourth carrier body parts (524) may be formed with a second shaft hole (526) coupled by the second pinion gear shaft (512) coupled to a rotating center of the second pinion gear (510).

A portion of the gear teeth of the second pinion gear (510) may be exposed from the second openings (525) of the fourth carrier body part (524) while the second shaft hole (526) is coupled to the second pinion gear (510), and the gear teeth of the second pinion gear (510) may be respectively gear-coupled to the second sun gear part (410) formed on the second shaft (400) and to the second inner gear teeth (126) of the ring gear (100).

The second driving gear (530) may stop or rotate the second carrier (520).

The second driving gear (530) may vertically coupled to the fourth carrier body part (524), for example, and the second driving gear (530) may be used by a worm gear or various gears that change the rotating direction, for example.

The second rotating unit (540) may be coupled to the second driving gear (530), and the second rotating unit (540) may rotate the second driving gear (530). The second rotating unit (540) may include a motor, for example.

The second rotating unit (540) in the exemplary embodiment of the present invention may be used by a motor configured to adjust a rotating speed of the second driving gear (530) in response to a current without recourse to decelerator (reducer).

The second driving gear (530) in the exemplary embodiment of the present invention may be rotated in the forward direction or in the reverse direction, whereby the second carrier (520) may be also rotated in the forward direction or in the reverse direction.

The second pinion gear (510) may be also resolved in the forward direction or in the reverse direction relative to the second shaft (400) by the forward rotation or reverse direction of the second carrier (520).

When the second pinion gear (510) is revolved in the same direction as that of the ring gear (100), the revolution of the second shaft (400) may be reduced, and when the second pinion gear (510) is revolved to the reverse direction with the ring gear (100), the revolution of the second shaft (400) may be increased.

The ring gear (100), the first shaft (200), the first transmission module (300), 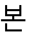 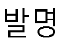 the second shaft (400) and the second transmission module (500) in the exemplary embodiment of the present invention may be encased by a case, and each portion of the first shaft (200) and the second shaft (400) may be stably and additionally fixed to the case by the bearing.

At the same time, constitutional elements rotating along with the first driving gear (330) of the first transmission module (300) and the second driving gear (530) of the second transmission module (500) may be also stably fixed to the case by the bearing.

The multi-stage transmission (800) in the exemplary embodiment of the present invention may further comprise a control module, wherein the control module may continuously increase and continuously decrease the revolution of the second shaft (500) by controlling the revolution of the first rotating unit (340) of the first transmission unit (350) of the first transmission module (300) and the revolution and rotation direction of the second rotating unit (540) of the second transmission unit (350) of the second transmission module (500).

Hereinafter, the operation of the multi-stage transmission according to the exemplary embodiment of the present invention will be described.

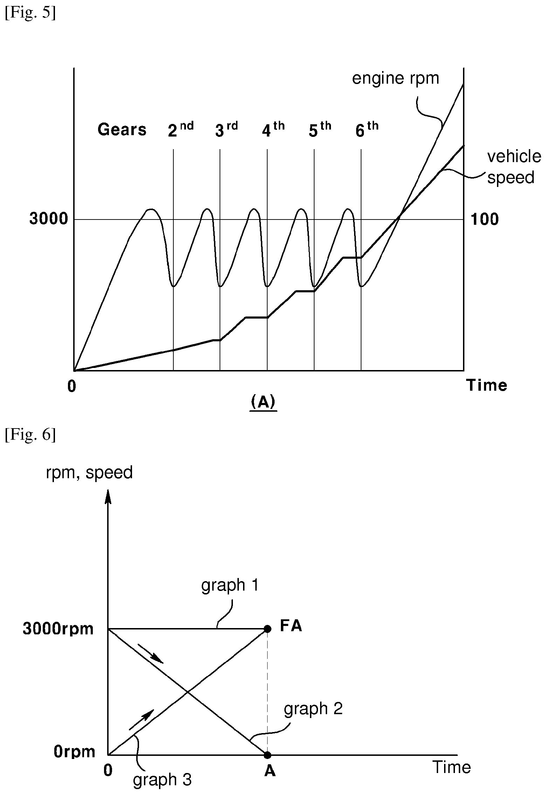

FIG. 5 is a graph illustrating a relationship between engine rpm and speed used in the conventional automobile engine.

The graph 'A' in FIG. 5 shows the engine rpm of a vehicle and the graph 'B' illustratates a speed of a vehicle.

Referring to FIG. 5, when an engine rpm of a vehicle is increased from 0 rpm to 3,000 rpm to allow proceeding to a two-to-six stage transmission, an engine rpm at a transmission point repeats an increase and a decrease in order to proceed to the transmission, whereby speed of a vehicle may gradually increase discontinuously in response to the transmission of the vehicle.

FIG. 6 is a graph illustrating an rpm of multi-stage transmission, a first transmission module and speed of a vehicle according to an exemplary embodiment of the present invention.

A horizontal axis in FIG. 6 shows a time, and a vertical axis shows an engine rpm and speed, the graph 1 illustrates an rpm of a first axis, the graph 2 illustrates the revolution of a first pinion gear of first transmission module, and the graph 3 illustrates a vehicular speed in response to the rotation outputted by the second shaft (400).

Referring to FIGS. 3 to 6, the first shaft (200) may rotate by a first revolution because the rotational force is applied from an engine or a motor by the first rotation. The first rotation in the exemplary embodiment of the present invention may be approximately 3,000 rpm when the time axis is zero..

When a rotational force having a first rotation is provided to the first shaft (200) in the exemplary embodiment of the present invention when the time axis is zero, the control module may detect the revolution applied to the first shaft (200) to apply a control signal that the first rotation unit (340) of the first transmission module (300) rotates at a first (number of) revolution.

The first rotation unit (340) may be rotated at a first rotation in response to application of control signal to the first rotation unit (340), and as a result, the first driving gear (330) is rotated to allow the first carrier (320) and the first pinion gear (310) coupled to the first carrier (320) to also rotate at the first (number of) rotation.

That is, when the time axis is zero (0), the first pinion gear (310) may revolve about the first shaft (200) at a first (number of) revolution, and as a result, the ring gear (100) may not be rotated and therefore, when the time axis is zero (0), the vehicle speed may be zero (0).

That is, when the (number of) rotation of the first axis (200) and the (number of) revolution of the first pinion gear (310) are substantially same, the ring gear 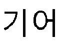 (100) may not rotate despite the rotation of the first shaft (200).

Successively, when an acceleration manipulation is done by a user in order to increase a vehicle speed, the control module may apply a control signal continuously decreasing the rotation to the first rotating unit (340) while the resolution of the first axis (200) is maintained at the first revolution.

The (number of) rotation of the first rotating unit (340) may continuously decrease in time in response to the control signal of control module, and as illustrated in FIG. 6, the rotation of the first driving gear (330) and the first carrier (320) may also decrease, while the revolution of the first pinion gear (310) relative to the first shaft (200) may also decrease.

When the second driving gear (530) of the second transmission module (500) is not rotated, the rotation of the ring gear (100) may increase in response to the decreased revolution of the first pinion gear (310).

When the rotation of the ring gear (100) increases while the second driving gear (530) of the second transmission module (500) is not rotated, the second pinion gear (510) coupled to the ring gear (100) may not revolve but idle to rotate the second axis (400), where the revolution of the second axis (400) may increase in proportion to the revolution of the ring gear (100) to thereby increase the vehicle speed.

When the first driving gear (330) is not rotated by allowing the first rotating unit (340) of the first transmission module (300) to stop whereby the first driving gear (330) is not rotated, and by allowing the time to reach 'A' in FIG. 6, the vehicle may reach a first speed (FA) while the second driving gear (530) of the second transmission module (500) is not rotated because the first pinion gear (310) only idles without revolution.

The vehicle may reach the first speed (FA) when the first pinion gear (310) of the first transmission module (300) only idles without revolution while the second driving gear (530) of the second transmission module (500) is not rotated and the first (number of) rotation is applied to the first shaft (200).

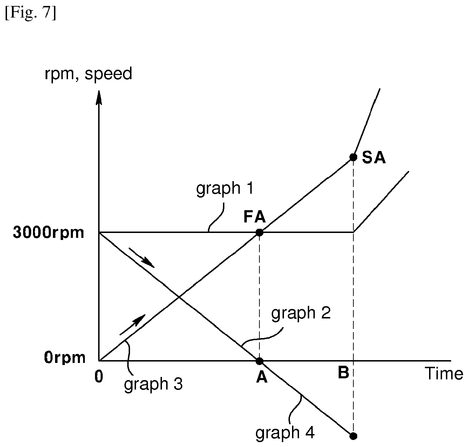

FIG. 7 is a graph illustrating an accelerated speed and a decelerated speed of a vehicle under a first speed (FA) using a second transmission module.

As illustrated in FIG. 6, the vehicle may reach the first speed (FA) when the first pinion gear (310) of the first transmission module (300) only idles without revolution while the second driving gear (530) of the second transmission module (500) is not rotated and the first (number of) rotation is applied to the first shaft (200).

The graph 4 in FIG. 7 defines the number of rotation when the second rotating unit (540) of the second transmission module (500) rotates to the first direction. The graph 5 is a graph illustrating a second speed (SA) of a vehicle when the second rotating unit (540) is rotated to the first direction.

When a user manipulates a vehicle for the second speed (SA) which is a higher speed than the first speed (FA), the control module may apply a control signal to the second rotating unit (540) to rotate the second pinion gear (510) to a direction opposite to the rotating direction of the second shaft (500) and to more fastly rotate the second shaft (400) using the second driving gear (530) of the second transmission module (500) from time 'A' to time 'B', and as a result, the vehicle may be accelerated to the second speed (SA) which is faster than the first speed (FA).

Subsequently, in order for the user to more fastly accelerate the vehicle speed than the second speed (SA), the user may realize a third speed which is faster than the second speed (SA) by applying the second (number of) rotation which is higher than the first (number of) rotation that is inputted to the first shaft (200).

Although the exemplary embodiment of the present invention has illustrated and explained that the first shaft (200) is rotated at a predetermined rpm, the first shaft (200) may be rotated with a continuously increased or decreased rpm.

The control module in the exemplary embodiment of the present invention may advance or reverse a vehicle and also accelerate or decelerate the vehicle speed by controlling the number of rotation and the rotating direction of the first rotating unit (340) of the first transmission module (300), and the number of rotation and the rotating direction of the second rotating unit (540) of the second transmission module (500).

As discussed above, the multi-stage transmission according to the present invention can instantly operate super-sized ships, large military vehicles, trains, robot joints, conveyor belts, electric vehicles and wind generators at a high number of rotation without recourse to reduction of the high number of rotation instantly outputted from the power sourses such as the super-sized ships, the large military vehicles, the trains, the robot joints, the conveyor belts, the electric vehicles and the wind generators.

Meantime, the foregoing explanations are intended only to be illustrative of the technical ideas of the present invention, and therefore, it should be appreciated by the skilled in the art that the invention is not limited in its application to any particular exemplary embodiments, and various modifications, additions and substitutions are possible, without departing from the scope and spirit of the invention as disclosed in the accompanying claims.

### [Industrial Applicability]

The multi-stage transmission according to the present invention can be variably used for overall industries including but not limited to super-sized ships, large military vehicles, trains, robot joints, conveyor belts, electric vehicles and wind generators.

## Claims

1. a multi-stage transmission, comprising:
a ring gear having inner gear teeth formed on the inner side;
a first transmission module comprising first shaft, which is disposed on the inner side of the ring gear and has a first sun gear formed on the outer peripheral side, a first pinion gear, which is a gear coupled to the first sun gear and the inner gear teeth, and a first transmission unit which enables rotation and revolution of the first pinion gear inside the ring gear; and
a second transmission module comprising a second shaft, which is disposed on the inner side of the ring gear and has a second sun gear formed on the outer peripheral side, a second pinion gear, which is a gear coupled to the second sun gear and the inner gear teeth, and a second transmission unit which enables rotation and revolution of the second pinion gear inside the ring gear.

2. The multi-stage transmission of claim 1, wherein the first shaft and the second shaft in the ring gear are mutually spaced apart, wherein the first shaft and the second shaft are disposed at a rotating center of the ring gear.

3. The multi-stage transmission of claim 1, further comprising:
a support plate supporting a distal end of the first shaft and a distal end of the second shaft, each oppositely disposed; and
a bearing coupled to the support plate to rotatably support the distal end of the first shaft and the distal end of the second shaft.

4. The multi-stage transmission of claim 3, wherein the support plate is fixed to an inner side of the ring geart to rotate along with the ring gear.

5. The multi-stage transmission of claim 1, wherein a plurality of the first pinion gears and the second pinion gears is coupled to the inner gear teeth of the ring gear each at an equal angle.

6. The multi-stage transmission of claim 1, wherein the first transmission unit includes a first carrier rotatably fixing the first pinion gears, a first driving gear revolving the first pinion gears relative to the first shaft by rotating the first carrier, and a first rotating unit rotating the first driving gear to a forward direction or to a backward direction.

7. The multi-stage transmission of claim 6, wherein the first carrier includes a first carrier body part encompassing the first shaft, and a second carrier body part extended from the first carrier body part wherein the second carrier body part is formed with a first opening exposing the first pinion gears, and wherein an outside of the ring gear on the first carrier body part is gear-coupled by a first driving gear.

8. The multi-stage transmission of claim 1, wherein the second transmission unit includes a second carrier rotatably fixing the second pinion gears, a second driving gear revolving the second pinion gears relative to the second shaft by rotating the second pinion gears, and a rotating unit rotating the second driving gear to a forward direction or to a backward direction.

9. The multi-stage transmission of claim 8, wherein the second carrier includes a third carrier body part encompassing the second shaft and a fourth carrier body part extended from the third carrier body part, wherein the third carrier body part is formed with a second opening exposing the second pinion gears, and gear-coupled by the second driving gear at an outside of the ring gear in the third carrier body part.

10. The multi-stage transmission of claim 1, wherein the first transmission unit and the second transmission unit rotate and revolve the first pinion gear and the second pinion gear at mutually different speeds.

11. The multi-stage transmission of claim 1, wherein the inner teeth of the ring gear are locally formed on an area corresponding to that of the first and second pinion gears.

12. The multi-stage transmission of claim 1, wherein the ring gear is formed in a cylindrical shape to accommodate the first and second pinion gears.

13. The multi-stage transmission of claim 1, further comprising a cover encompassing the ring gear, and the first and second transmission modules and exposing the first and second shafts.

14. The multi-stage transmission of claim 1, wherein the first shaft is an input shaft applied with a power, and the second shaft is an output shaft outputting the power.

15. The multi-stage transmission of claim 1, wherein the ring gear is formed at an outer lateral surface with outside teeth gear-coupled to a gear formed on the power source applying a rotational force from an outside.

16. The multi-stage transmission of claim 1, further comprising a control module applying a control signal to the first and second transmission modules in order to control the revolution of the first pinion gear, the rotating direction, the revolution of the second pinion gear, and the rotating direction.

17. The multi-stage transmission of claim 16, wherein the control module provides a control signal to the first transmission module to revolve the first pinion gear with the same revolution as that of the first shaft.
